# EUROPÄISCHE PATENTSCHRIFT

(11) **EP 4 178 778 B1**
(45) Veröffentlichungstag und Bekanntmachung des Hinweises auf die Patenterteilung: **31.07.2024**
(21) Anmeldenummer: 21735842.3
(22) Anmeldetag: 18.06.2021
(51) Int. Cl.: B29B 11/16

(54) **VERFAHREN ZUM BEREITSTELLEN VON ZUSCHNITTEN AUS EINER FASERBAHN**
METHOD FOR PROVIDING BLANKS FROM A FIBRE WEB
PROCÉDÉ DE PRODUCTION DE DÉCOUPES À PARTIR D'UNE NAPPE DE FIBRES

(30) Priorität: 08.07.2020 AT 505882020
(43) Veröffentlichungstag der Anmeldung: 17.05.2023
(73) Patentinhaber: GFM GmbH, 4403 Steyr (AT)
(72) Erfinder: DIETACHMAYR, Harald, 4522 Sierning (AT)
(74) Vertreter: Hübscher & Partner Patentanwälte GmbH
(86) Internationale Anmeldenummer: PCT/AT2021/060211
(87) Internationale Veröffentlichungsnummer: WO 2022/006603

(56) Entgegenhaltungen:
- CH-A1- 704 406
- DE-U1- 202007 006 528
- US-A1- 2016 368 226

## Beschreibung

### Technisches Gebiet

Die Erfindung bezieht sich auf ein Verfahren zum Bereitstellen von Zuschnitten aus einer Faserbahn in einer für einen lageweisen Aufbau eines Werkstücks aus diesen Zuschnitten vorgegebenen Reihenfolge, wobei die je einem Entnahmebereich der Faserbahn zugehörigen Zuschnitte den Entnahmebereichen entnommen und je Entnahmebereich in wenigstens einem Ablageelement abgelegt und dann in Abhängigkeit von einer durch den lageweisen Aufbau des Werkstücks vorgegebenen Reihenfolge aus den Ablageelementen entnommen werden.

### Stand der Technik

Aus entsprechend ausgebildeten, vorzugsweise vorimprägnierten oder thermoplastischen Faserbahnen können aufwendige Werkstücke hergestellt werden, indem entsprechende Zuschnitte aus solchen Faserbahnen in Formen eingelegt und je nach Ausbildung gegebenenfalls unter Druckanwendung ausgehärtet werden. Der lageweise Aufbau des Werkstücks aus einzelnen unterschiedlichen Zuschnitten erfordert die Bereitstellung dieser Zuschnitte in einer durch den lageweisen Aufbau des herzustellenden Werkstücks bestimmten Reihenfolge. Auf diese Reihenfolge kann jedoch bei der Verteilung der Zuschnitte über die Fläche der Faserbahn unter Bedachtnahme auf einen minimalen Verschnitt keine Rücksicht genommen werden. Dies bedeutet, dass die Zuschnitte, die in einer durch den lageweisen Aufbau des Werkstücks bestimmten Reihenfolge verfügbar sein sollen, hinsichtlich dieser Reihung ungeordnet über die Faserbahnfläche verteilt sind (DE 20 2007 006 528 U1). Die einzelnen Zuschnitte müssen daher mithilfe von entsprechenden Handhabungseinrichtungen aus der Faserbahn ausgehoben und entweder auf wenigstens einem Ablagetisch zwischengelagert oder unmittelbar einer Auflegestation zur Bildung eines Formkörpers zugeführt werden. Unabhängig davon, ob die zum Aufbau des Formkörpers benötigten Zuschnitte der Auflegestation unmittelbar zugeführt oder zunächst auf wenigstens einem Ablagetisch nebeneinander oder stapelweise abgelegt werden, ist eine Sortierung der Zuschnitte entsprechend dem lageweisen Aufbau des zu bildenden Formkörpers erforderlich, was bei Werkstücken aus einer Vielzahl von Zuschnitten einen aufwendigen, zeitraubenden Sortiervorgang für die Zuschnitte bedingt.

Um den Sortiervorgang zu automatisieren, wurde bereits vorgeschlagen (EP 0 511 937 A1), die in einer nicht entsprechend der Lagenfolge im herzustellenden Werkstück über die Fläche der einseitig imprägnierten Faserbahn verteilten Zuschnitte aus einzelnen Entnahmebereichen in der vorgegebenen Verteilerlage gemeinsam aus der Faserbahn auszuheben und in dieser Verteilerlage in Ablageelementen abzulegen, um dann diese Ablageelemente in einem Zwischenspeicher zu lagern. Zum Einbringen der Zuschnitte in die Form zur Herstellung der Werkstücke werden die entsprechenden Ablageelemente dem Zwischenspeicher entnommen und einer Wendeeinrichtung zugeführt, um die mit der imprägnierten Seite nach oben auf dem Ablageelement abgelegten Zuschnitte mit nach unten weisender Imprägnierschicht in die Form einlegen zu können. Zu diesem Zweck werden die Zuschnitte durch die Wendeeinrichtung in der Verteilerlage vom Ablageelement abgehoben und um 180° um eine horizontale Achse gewendet, um dann einzeln mithilfe einer Legeeinrichtung in der Reihenfolge des Lagenaufbaus des herzustellenden Werkstücks in die Form eingelegt zu werden. Da die Verteilerlage der Zuschnitte in den Entnahmebereichen und ihre Reihung innerhalb der Lagefolge des herzustellenden Werkstücks bekannt sind und sich diese Parameter bei der Zuschnittentnahme sowie bei der weiteren Förderung der Zuschnitte mittels der Ablageelemente und der Wendeeinrichtung nicht ändern, können die einzelnen Zuschnitte durch die Legeeinrichtung lagegenau erfasst und in der durch die Lagefolge im Werkstück vorgegebenen Reihenfolge in die Form eingebracht werden. Nachteilig ist insbesondere, dass aufgrund der zwingend erforderlichen Beibehaltung der Verteilerlage nach der Abnahme der Zuschnitte aus dem jeweiligen Entnahmebereich der Faserbahn Ablageelemente mit entsprechenden Ablageflächen bereitgestellt werden müssen. Außerdem müssen alle Zuschnitte, die für den Aufbau zumindest eines mehrere Lagen umfassenden Abschnitts des Werkstücks benötigt werden, von einem Ablageelement in einer entsprechenden Reihenfolge zur Verfügung gestellt werden können, sodass trotz der möglichen ungereihten Verteilung dieser Zuschnitte über einen Entnahmebereich der Faserbahn ein unter Umständen erheblicher Verschnitt in Kauf genommen werden muss. Diese bekannten Sortiersysteme eignen sich daher im Wesentlichen nur für Werkstücke, deren Lagen durch Zuschnitte aus einem einzigen Entnahmebereich bereitgestellt werden können, was den Anwendungsbereich erheblich einschränkt.

Bei Werkstücken, die aus vergleichsweise wenigen Lagen aufgebaut sind, können die Zuschnitte für die einzelnen Lagen gemeinsam in Ablageelementen abgelegt werden (WO 2012/104174 A1), um dann die Zuschnitte den einzelnen Ablageelementen durch wenigstens einen Roboter in der dem Lagenaufbau der herzustellenden Werkstücke entsprechenden Reihenfolge entnehmen und in die Form einlegen zu können. Da übereinstimmende Zuschnitte für eine Vielzahl von Werkstücken nebeneinander ausgerichtet auf den Ablageelementen bereitgestellt werden sollen, ergibt sich für die Ablageelemente wiederum ein erheblicher Flächenbedarf. Abgesehen davon, sind solche Sortiervorrichtungen nur für die Herstellung von Werkstücken mit einer vergleichsweise geringen Lagenanzahl geeignet.

### Darstellung der Erfindung

Der Erfindung liegt somit die Aufgabe zugrunde, ein Verfahren anzugeben, mit dessen Hilfe auch eine Vielzahl von Zuschnitten, die unabhängig von einer Entnahmereihenfolge in einer Faserbahn verteilt sind, der Faserbahn ohne aufwendiges Absuchen in einer Reihung entnommen werden können, die eine vorteilhafte Weitergabe der Zuschnitte in einer vorgegebenen, durch den Werkstückaufbau bestimmten Reihenfolge ermöglicht.

Ausgehend von einem Verfahren der eingangs geschilderten Art löst die Erfindung die gestellte Aufgabe dadurch, dass die den Entnahmebereichen einzeln entnommenen Zuschnitte in den Ablageelementen jeweils in einer ihrer Lagefolge im Werkstück entsprechenden Reihenfolge übereinandergestapelt werden und dass dann die in den Ablageelementen gestapelten Zuschnitte für ein Werkstück nacheinander in einer gegenüber ihrer Lagefolge im Werkstück gestürzten Reihenfolge den Ablageelementen einzeln entnommen und in einem Speicherelement übereinander gestapelt werden, bevor sie nacheinander in der für den lageweisen Aufbau des Werkstücks vorgegebenen Reihenfolge dem Speicherelement entnommen und in eine Form zur Herstellung des Werkstücks eingebracht werden.

Da die aus der Faserbahn ausgeschnittenen Zuschnitte einem Entnahmebereich unabhängig davon entnommen werden, ob die Zuschnitte in diesem Entnahmebereich einer durch den Werkstückaufbau bestimmten Reihenfolge entsprechen, werden die für die Herstellung eines Werkstücks erforderlichen Zuschnitte von Entnahmebereich zu Entnahmebereich fortschreitend aus der Faserbahn gelöst, wodurch sich ein zeitaufwendiges Absuchen der Faserbahn nach Zuschnitten für bestimmte Lagen im Werkstück erübrigt.

Trotz der Entnahme der Zuschnitte aus Entnahmebereichen, in denen die Zuschnitte nicht in einer dem Werkstückaufbau entsprechenden Reihenfolge vorliegen, kann eine Vorsortierung vorgenommen werden, die in vergleichsweise einfacher Art eine nachfolgende Weitergabe in einer durch den Werkstückaufbau bestimmten Reihenfolge erlaubt. Die einzelnen Zuschnitte, deren Reihung innerhalb des Werkstückaufbaus bekannt ist, werden somit je Entnahmebereich in wenigstens einem Ablageelement in einer Reihung übereinandergestapelt, die der jeweiligen Lagefolge im herzustellenden Werkstück entspricht. Dies bedeutet, dass die Zuschnitte in jedem Ablageelement in einer aufsteigenden Folge ihrer Ordnung übereinandergestapelt werden, wenn das Werkstück in einer aufsteigenden Ordnungsfolge aus den einzelnen Zuschnitten aufgebaut wird. Die Ordnung der einzelnen Zuschnitte wird dabei durch die für jeden Zuschnitt vorgegebene Lage im Werkstückaufbau bestimmt, sodass der Zuschnitt für die i-te Lage die i-te Ordnung aufweist.

Umfasst demnach beispielsweise ein Entnahmebereich die Zuschnitte für die dritte, achte und neunzehnte Lage des Werkstücks, weisen somit diese Zuschnitte die Ordnung Drei, Acht und Neunzehn auf, so werden diese Zuschnitte in einem Ablageelement in einem Stapel mit einer aufsteigenden Ordnung abgelegt, sodass auf den Zuschnitt für die dritte Lage der Zuschnitt für die achte und darauf der Zuschnitt für die neunzehnte Lage im Stapel zu liegen kommen. Demzufolge können die Zuschnitte dem Stapel des jeweiligen Ablageelements entsprechend der absteigenden Ordnung der Lagen des herzustellenden Werkstücks nacheinander entnommen werden. Da alle für den Werkstückaufbau erforderlichen Zuschnitte aus den einzelnen Entnahmebereichen in dieser Art in Ablageelementen sortiert abgelegt werden, können die Zuschnitte in einer gegenüber der Lagenfolge des Werkstückaufbaus gestürzten Reihenfolge den Zuschnittstapeln der einzelnen Ablageelemente entnommen werden, um alle für den Aufbau eines Werkstücks erforderlichen Zuschnitte in dieser gestürzten Folge in einem Speicherelement zu stapeln. Da somit bei n Zuschnitten für die Herstellung eines Werkstücks der die oberste Lage des Werkstücks bildende n-te Zuschnitt die unterste Stapellage in diesem Speicherelement darstellt, auf die nacheinander die übrigen Zuschnitte in der gestürzten Reihenfolge der Lagenfolge des Werkstücks abgelegt werden, bildet der für die unterste Lage des Werkstücks vorgesehene Zuschnitt mit der Ordnungszahl 1 die oberste Stapellage, sodass dem Speicherelement die für die einzelnen Lagen des Werkstücks vorgesehenen Zuschnitte nacheinander entnommen und in der richtigen Reihenfolge in die Form zur Herstellung des Werkstücks eingebracht werden können.

Das Ablegen der Zuschnitte aus den einzelnen Ablageelementen in ein Speicherelement für alle zur Herstellung eines Werkstücks benötigten Zuschnitte in einer der Lagenfolge im herzustellenden Werkstück entsprechenden, durchgehenden, aber gestürzten Reihung bedingt zwar einen zusätzlichen Sortierschritt, doch wird das Beladen der Form zur Herstellung des Werkstücks durch das Bereitstellen aller für die Herstellung eines Werkstücks benötigten Zuschnitte auf einem gemeinsamen Speicherelement vereinfacht und unabhängig von den Taktzeiten zum Schneiden und Entnehmen der Zuschnitte aus der Faserbahn.

Umfassen die Entnahmebereiche eine größere Anzahl von Zuschnitten, so kann die Entnahme der einzelnen Zuschnitte durch das Vorsehen von zumindest zwei Greifern für die Zuschnitte beschleunigt werden, weil die Greifer voneinander unabhängig die von ihnen erfassten Zuschnitte in gesonderte Ablageelemente zu Stapeln ablegen können, und zwar jeweils in einer für den lageweisen Aufbau des Werkstücks erforderlichen, von der auf- oder absteigenden Ordnung der Lagen im Werkstück abhängigen auf- oder absteigenden Ordnung innerhalb derStapel.

Die einzelnen Zuschnitte müssen jedoch nicht nur in einer von der auf- oder absteigenden Ordnung der Lagen des herzustellenden Werkstücks abhängigen auf- oder absteigenden Ordnung den Stapeln der Ablageelemente entnommen, sondern auch in einer ausgerichteten Position auf die Form für das Werkstück übertragen werden. Zu diesem Zweck können die einzelnen Zuschnitte in einer vorgegebenen Lage zu Stapeln in den Ablageelementen und dem Speicherelement übereinander abgelegt werden, sodass aufgrund der Stellung der Ablageelemente bzw. des Speicherelements die räumliche Ausrichtung der einzelnen ausgerichtet in den Stapeln abgelegten Zuschnitte bestimmt ist und die Zuschnitte den Ablageelementen und dem Speicherelement ohne neuerliche Bestimmung ihrer Ausrichtung übernommen werden können.

Die Ausrichtung der Zuschnitte in Bezug auf die Ablageelemente muss dabei keineswegs mit der ursprünglichen Ausrichtung der Zuschnitte innerhalb der Faserbahn übereinstimmen. Es wird vorzugsweise eine Ausrichtung gewählt, die eine platzsparende Stapelung der Zuschnitte auf den Ablageelementen erlaubt.

### Kurze Beschreibung der Erfindung

Das erfindungsgemäße Verfahren wird anhand der Zeichnung näher erläutert. Es zeigen
- Fig. 1: einen Teil einer Sortiereinrichtung zum erfindungsgemäßen Stapeln von einzelnen Entnahmebereichen entnommenen Zuschnitten in Ablageelementen in einem schematischen Blockschaltbild und
- Fig. 2: die Sortiereinrichtung im Bereich der Übergabe der in den Ablageelementen gestapelten Zuschnitte an ein Speicherelement zur Stapelung aller für die Herstellung eines Werkstücks benötigten Zuschnitte, ebenfalls in einem schematischen Blockschaltbild.

### Wege zur Ausführung der Erfindung

Zum Herstellen eines aus übereinander geschichteten Lagen aus einem Fasermaterial aufgebauten Werkstücks werden den einzelnen Lagen entsprechende Zuschnitte Zᵢ aus einer beispielsweise vorimprägnierten Faserbahn 1 ausgeschnitten und in einer der Lagenfolge entsprechenden Reihenfolge in eine zur Herstellung des Werkstücks vorgesehene Form eingebracht. Um die Faserbahn 1 optimal unter einem minimierten Verschnitt nützen zu können, sind die einzelnen Zuschnitte Zᵢ entsprechend ihrer Größe und geometrischen Umrissform über die Faserbahn 1 unabhängig von ihrer Lage im Werkstückaufbau verteilt angeordnet. Die Ordnung i der Zuschnitte Zᵢ ist durch die Aufeinanderfolge der einzelnen Lagen des Werkstücks bestimmt, wobei i für die Zahlenreihe 1 bis n steht, wenn n die Gesamtanzahl der für den Werkstückaufbau benötigten Zuschnitte Zᵢ bedeutet.

Damit nicht die gesamte Faserbahn 1 zur Bereitstellung der einzelnen Zuschnitte Zᵢ in einer dem Lagenaufbau des herzustellenden Werkstücks entsprechenden Reihenfolge abgesucht werden muss, um die Zuschnitte Zᵢ in einer gegenüber der Lagefolge im herzustellenden Werkstück gestürzten Ordnung entnehmen zu können, werden die Zuschnitte Zᵢ nacheinander einzelnen Entnahmebereichen Eⱼ entnommen und je Entnahmebereich Eⱼ in zumindest einem Ablageelement Aⱼ in Stapelform ausgerichtet abgelegt, und zwar jeweils in einer auf- oder absteigenden Ordnung, die der auf- oder absteigenden Ordnung der Lagen im Aufbau des herzustellenden Werkstücks entspricht.

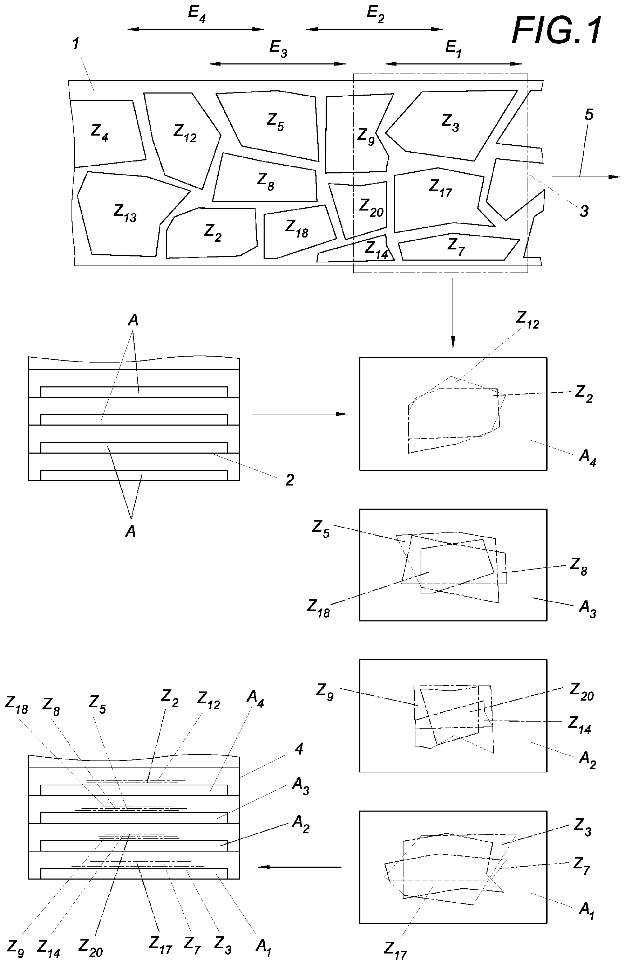

Wie der Fig. 1 entnommen werden kann, wird zum Entnehmen der die späteren Lagen Nr. 3, 17 und 7 bildenden Zuschnitte Z₃, Z₁₇ und Z₇ aus einem Entnahmebereich E₁ zunächst ein Ablageelement A₁ zur gestapelten Aufnahme der Zuschnitte Zᵢ aus einem Vorratsspeicher 2 zur Verfügung gestellt. Die mit einer entsprechenden Kennung für Ihre Ordnung versehenen Zuschnitte Z₃, Z₁₇ und Z₇ werden dem Entnahmebereich E₁ mithilfe einer strichpunktiert angedeuteten Entnahmeeinrichtung 3 aufgrund der aufsteigenden Ordnung der Lagenfolge des herzustellenden Werkstücks in einer der Lagenfolge entsprechenden, aufsteigenden Ordnung aus der Faserbahn 1 gelöst, sodass zunächst der Zuschnitt Z₃ aus der Faserbahn 1 in einer vorgegebenen Ausrichtung in das Auflageelement A₁ abgelegt wird, und zwar in einer bestimmten Ausrichtung gegenüber dem Ablageelement A₁, die nicht mit der ursprünglichen Ausrichtung übereinstimmen muss und vorzugsweise so gewählt wird, dass die Platzverhältnisse auf dem Ablageelement zum Stapeln der Zuschnitte Zi vorteilhaft genützt werden können. Nach der ausgerichteten Ablage des Zuschnitts Z₃ werden der Zuschnitt Z₇ und der Zuschnitt Z₁₇ jeweils ausgerichtet übereinander zu einem Stapel auf den Zuschnitt Z₃ abgelegt. Mit der Entnahme aller Zuschnitte Zᵢ aus dem Entnahmebereich E₁ wird das beladene Ablageelement A₁ in einen Speicher 4 gefördert, aus dem die einzelnen Ablageelemente Aⱼ zur Entnahme ihrer Zuschnitte Zᵢ zur Verfügung gestellt werden können. Obwohl der Speicher 4 aus Übersichtlichkeitsgründen als ein vom Vorratsspeicher 2 gesonderter Speicher dargestellt ist, wird in der Praxis häufig nur ein Speicher vorgesehen werden, der die Aufgaben sowohl des Vorratsspeichers 2 als auch des Speichers 4 übernimmt.

Zur Entnahme der Zuschnitte Zᵢ aus einem anschließenden Entnahmebereich E₂ wird die Faserbahn 1 in Richtung des Pfeils 5 entsprechend weitergefördert, um den Entnahmebereich E₂ gegenüber der Entnahmeeinrichtung 3 auszurichten. Der Entnahmevorgang wiederholt sich, wobei die Zuschnitte Z₉, Z₁₄ und Z₂₀ nacheinander auf ein leeres Ablageelement A₂ aus dem Vorratsspeicher 2 zu einem Stapel abgelegt werden, bevor das Ablageelement A₂ in den Speicher 4 eingelagert wird. Um eine bessere Stapelbarkeit zu sichern, ist der Zuschnitt Z₉ gegenüber der Ausrichtung in der Faserbahn 1 um 90° gedreht auf dem Ablageelement A₂ ausgerichtet abgelegt.

Die Zuschnitte Zᵢ aus dem Entnahmebereich Es werden nach einem Förderschritt in Richtung des Pfeils 5 in analoger Weise auf einem Ablageelement A₃ in einer aufsteigenden Ordnung zu einem Stapel übereinandergelegt, wobei der Zuschnitt Z₅ auf dem Ablageelement A₃ ausgerichtet abgelegt wird und anschließend die Zuschnitte Z₈ und Z₁₈ auf den Zuschnitt Z₅ übereinandergestapelt werden, um diesen Stapel nach einer Einlagerung des Ablageelements A₃ in den Speicher 4 zur Entnahme der Zuschnitte Zᵢ zur Verfügung zu haben.

Die Zuschnitte Z₂ und Z₁₂ des Entnahmebereichs E₄ werden in der gleichen Art und Weise aus der Faserbahn 1 entnommen und in einem Ablageelement A₄ ausgerichtet zu einem Stapel abgelegt, bevor das Ablageelement A₄ in den Speicher 4 überführt wird. Der Zuschnitt Z₁₂ wurde vor seiner Ablage gedreht, um die Stapelbarkeit auf dem Ablageelement A₄ zu verbessern. Gemäß der Fig. 1 sind nach der Einlagerung des Ablageelements A₄ und aller weiteren Ablageelemente Aⱼ im Speicher 4 alle für die Herstellung eines Werkstücks benötigten Zuschnitte Zᵢ aus den Entnahmebereichen Eⱼ zur Einzelentnahme in einer absteigenden Reihenfolge enthalten.

Im Sinne einer übersichtlichen Darstellungsweise sind in der Fig. 1 die mit den zugehörigen Zuschnitten Zᵢ beladenen Ablageelemente Aⱼ nacheinander entsprechend den Entnahmebereichen Eⱼ gezeigt, obwohl diese Ablageelemente Aⱼ nach ihrer Beladung mit den Zuschnitten Zᵢ aus dem zugehörigen Entnahmebereich Eⱼ in den Speicher 4 überführt werden, bevor die Zuschnitte Zᵢ des nachfolgenden Entnahmebereichs Eⱼ₊₁ auf einem neuen Ablageelement Aⱼ₊₁ gestapelt werden. Im Speicher 4 sind die eingelagerten, beladenen Ablageelemente A₁ - A₄ mit den Zuschnittstapeln angedeutet, wobei die Ablageelemente Aⱼ keineswegs in der Reihenfolge der Entnahmebereiche in den Speicher 4 eingelagert werden müssen. Es ist ja lediglich die Kenntnis erforderlich, auf welchen Speicherplätzen sich die einzelnen Ablageelemente Aⱼ befinden.

Zur Herstellung eines Werkstücks aus den Zuschnitten Z₁ - Zₙ müssen diese Zuschnitte beginnend mit Z₁ in aufsteigender Ordnung in eine entsprechende Form eingebracht werden, sodass der Zuschnitt Z₁ die unterste Lage und der Zuschnitt Zₙ die oberste Lage des herzustellenden Werkstücks bilden.

Da die Zuschnitte Zi in den Stapeln der Ablageelemente Aj in einer aufsteigenden Ordnung abgelegt sind, können diese in den Ablageelementen Aj gestapelten Zuschnitte Zᵢ in einer gegenüber der aufsteigenden Ordnung der Lagen im Werkstück gestürzten, durchgehenden Reihenfolge nacheinander den Ablageelementen Aj entnommen und auf einem Speicherelement S gestapelt werden, das nunmehr alle für die Herstellung eines Werkstücks benötigten n Zuschnitte enthält.

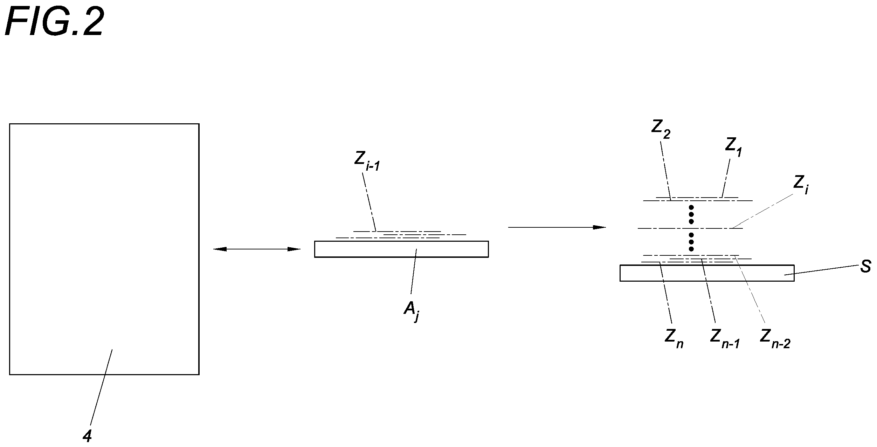

In der Fig. 2 ist das Einlagern der Zuschnitte Zi aus dem Speicher 4 in das Speicherelement S angedeutet. Es wird zunächst das Ablageelemente Aⱼ aus dem Speicher 4 ausgewählt, das den Zuschnitt Zₙ enthält. Da dieser Zuschnitt Zₙ die oberste Lage des Zuschnittstapels dieses Ablageelements bildet, kann er dem Stapel einfach in ausgerichteter Lage entnommen und auf dem Speicherelement S als unterste Lage gegebenenfalls mit einer geänderten Ausrichtung abgelegt werden, um dann das Ablageelement Aⱼ mit dem die oberste Stapellage bildenden Zuschnitt Zₙ₋₁ auszuwählen und diesen Zuschnitt Zₙ₋₁ im Speicherelement S auf dem Zuschnitt Zₙ gerichtet abzulegen, bevor der Zuschnitt Zₙ₋₂ in analoger Weise auf das Speicherelement S überführt wird.

Es wird demnach auf die den Zuschnitt Zᵢ enthaltende Stapellage des Speicherelements der in der gestürzten Reihenfolge jeweils folgende Zuschnitt Zᵢ₋₁ aufgbracht, bis der Stapel mit den obersten Lagen Z₂ und Z₁ endet. Aus dem Zuschnittstapel des Speicherelements S können somit die für die Herstellung eines Werkstücks benötigen Zuschnitte Z₁ - Zₙ in einer durchgehenden Reihung entnommen und nacheinander in die zur Herstellung des Werkstücks benötigte Form eingebracht werden. Dies bedeutet, dass beginnend mit dem Zuschnitt Z₁ und endend mit dem Zuschnitt Zₙ alle Zuschnitte in der erforderlichen Reihenfolge zum Beladen der Werkstückform in einfacher Weise zur Verfügung gestellt werden.

Werden die Zuschnitte Zᵢ in den einzelnen Entnahmebereichen Eⱼ nicht nur in einem Ablageelement Aⱼ, sondern in zwei oder mehreren Ablageelementen Aⱼₖ abgelegt, so kann der Sortiervorgang erheblich beschleunigt werden, weil die je Entnahmebereich Eⱼ zur Verfügung stehenden Ablageelemente Aⱼₖ unabhängig voneinander über gesonderte Greifer mit den Zuschnitten Zᵢ beladen werden können, und zwar wiederum je Ablageelement Aⱼₖ in einer aufsteigenden Ordnung.

Im Übrigen ist anzumerken, dass die Entnahmebereiche E der Faserbahn 1 nicht nur Zuschnitte Zi für ein Werkstück enthalten müssen. Sind in einem Entnahmebereich Zuschnitte für mehrere Werkstücke vorgesehen, was zu einer weiteren Minimierung des Verschnitts führen kann, so sind für die Zuschnitte Z gesonderter Werkstücke gesonderte Ablageelemente A vorzusehen, um für jedes Werkstück einen Satz von Ablageelementen A bereitstellen zu können, deren Stapeln alle für den Aufbau des Werkstücks benötigten Zuschnitte in einer entsprechenden Reihenfolge enthalten.

## Patentansprüche

1. Verfahren zum Bereitstellen von Zuschnitten (Z) aus einer Faserbahn (1) in einer für einen lageweisen Aufbau eines Werkstücks aus diesen Zuschnitten (Z) vorgegebenen Reihenfolge, wobei die je einem Entnahmebereich (E) der Faserbahn (1) zugehörigen Zuschnitte (Z) den Entnahmebereichen (E) entnommen und je Entnahmebereich (E) in wenigstens einem Ablageelement (A) abgelegt und dann in Abhängigkeit von einer durch den lageweisen Aufbau des Werkstücks vorgegebenen Reihenfolge aus den Ablageelementen (A) entnommen werden, **dadurch gekennzeichnet, dass** die den Entnahmebereichen (E) einzeln entnommenen Zuschnitte (Z) in den Ablageelementen (A) jeweils in einer ihrer Lagefolge im Werkstück entsprechenden Reihenfolge übereinandergestapelt werden und dass dann die in den Ablageelementen (A) gestapelten Zuschnitte (Z) für ein Werkstück nacheinander in einer gegenüber ihrer Lagefolge im Werkstück gestürzten Reihenfolge den Ablageelementen (A) einzeln entnommen und in einem Speicherelement (S) übereinander gestapelt werden, bevor sie nacheinander in der für den lageweisen Aufbau des Werkstücks vorgegebenen Reihenfolge dem Speicherelement (S) entnommen und in eine Form zur Herstellung des Werkstücks eingebracht werden.

2. Verfahren nach Anspruch 1, **dadurch gekennzeichnet, dass** die Zuschnitte (Z) den Entnahmebereichen (E) der Faserbahn (1) mithilfe von wenigstens zwei Greifern entnommen und in zumindest zwei Ablageelementen (A) je Entnahmebereich (E) übereinandergestapelt werden.

3. Verfahren nach Anspruch 1 oder 2, **dadurch gekennzeichnet, dass** die Zuschnitte (Z) in einer vorgegebenen Lage in den Ablageelementen (A) und im Speicherelement (S) übereinandergestapelt werden.

## Claims

1. Method for providing blanks (Z) from a fibre web (1) in a sequence predefined for a layer-by-layer construction of a workpiece from these blanks (Z), wherein the blanks (Z) each belonging to a removal region (E) of the fibre web (1) are removed from the removal regions (E) and are deposited per removal region (E) in at least one deposit element (A) and are then removed from the deposit elements (A) in accordance with a sequence predefined by the layer-by-layer construction of the workpiece, **characterized in that** the blanks (Z) that are individually removed from the removal regions (E) are stacked on top of one another in the deposit elements (A) in each case in a sequence that corresponds to their layering sequence in the workpiece, and **in that** the blanks (Z) for a workpiece that are stacked in the deposit elements (A) are then successively removed individually from the deposit elements (A) in a sequence which is reversed with respect to their layering sequence in the workpiece and are stacked on top of one another in a storage element (S), before being successively removed from the storage element (S) in the sequence predefined for constructing the workpiece layer-by-layer and inserted into a mould for producing the workpiece.

2. Method according to claim 1, **characterized in that** the blanks (Z) are removed from the removal regions (E) of the fibre web (1) with the aid of at least two grippers and are stacked on top of one another in at least two deposit elements (A) per removal region (E).

3. Method according to claim 1 or 2, **characterized in that** the blanks (Z) are stacked on top of one another in a predefined position in the deposit elements (A) and in the storage element (S).

## Revendications

1. Procédé de production de découpes (Z) à partir d'une nappe de fibres (1) selon une séquence prédéfinie pour une construction en couches d'une pièce à partir de ces découpes (Z), dans lequel les découpes (Z) chacune associée à une zone de prélèvement (E) de la nappe de fibres (1), sont prélevées des zones de prélèvement (E) et sont déposées par zone de prélèvement (E) dans au moins un élément de dépôt (A), et sont ensuite prélevées à partir des éléments de dépôt (A) en fonction d'une séquence prédéfinie pour la construction en couches de la pièce, **caractérisé en ce que** les découpes (Z) prélevées individuellement des zones de prélèvement (E) sont empilées les unes sur les autres dans les éléments de dépôt (A) respectivement selon une séquence correspondant à l'ordre de leur superposition dans la pièce, et **en ce que** les découpes (Z) empilées dans les éléments de dépôt (A) pour une pièce sont ensuite successivement prélevées des éléments de dépôt (A) de manière individuelle selon un ordre inversé par rapport à l'ordre de leur superposition dans la pièce, et sont empilées les unes sur les autres dans un élément de stockage (S), avant d'être prélevées l'une après l'autre de l'élément de stockage (S) selon la séquence prédéfinie pour la construction en couches de la pièce, et sont insérées dans un moule pour la fabrication de la pièce.

2. Procédé selon la revendication 1, **caractérisé en ce que** les découpes (Z) sont prélevées des zones de prélèvement (E) de la nappe de fibres (1) à l'aide d'au moins deux pinces et sont empilées les unes sur les autres dans au moins deux éléments de dépôt (A) par zone de prélèvement (E).

3. Procédé selon la revendication 1 ou 2, **caractérisé en ce que** les découpes (Z) sont empilées les unes sur les autres dans une position prédéterminée dans les éléments de dépôt (A) et dans l'élément de stockage (S).
